# EUROPÄISCHE PATENTSCHRIFT

(11) **EP 4 012 611 B1**
(45) Veröffentlichungstag und Bekanntmachung des Hinweises auf die Patenterteilung: **20.08.2025**
(21) Anmeldenummer: 20213726.1
(22) Anmeldetag: 14.12.2020
(51) Int. Cl.: G06F 18/21, G06F 18/2413

(54) **BESTIMMUNG DER FÜR EINEN BILDKLASSIFIKATOR ENTSCHEIDUNGSRELEVANTEN BILDANTEILE DURCH ZIELGERICHTETES ABWANDELN IM LATENTEN RAUM**
DETERMINATION OF IMAGE SECTIONS RELEVANT FOR AN IMAGE CLASSIFIER BY TARGETED MODIFICATION IN THE LATENT SPACE
DÉTERMINATION DES COMPOSANTES D'IMAGE PERTINENTES POUR LA DÉCISION D'UN CLASSIFICATEUR D'IMAGE PAR MODIFICATION CIBLÉE DANS L'ESPACE LATENT

(43) Veröffentlichungstag der Anmeldung: 15.06.2022
(73) Patentinhaber: Robert Bosch GmbH, 70442 Stuttgart (DE)
(72) Erfinder: Munoz Delgado, Andres Mauricio, 71263 Weil Der Stadt (DE)

(56) Entgegenhaltungen:
- LUKAS HOYER ET AL: "Grid Saliency for Context Explanations of Semantic Segmentation", 7 November 2019 (2019-11-07), XP055733935, Retrieved from the Internet <URL:https://arxiv.org/pdf/1907.13054.pdf> [retrieved on 20200925]
- JUAN HERNANDEZ: "Making AI Interpretable with Generative Adversarial Networks | by Juan Hernandez | Square Corner Blog | Medium", 4 April 2018 (2018-04-04), pages 1 - 13, XP055810133, Retrieved from the Internet <URL:https://medium.com/square-corner-blog/making-ai-interpretable-with-generative-adversarial-networks-766abc953edf> [retrieved on 20210602]

## Beschreibung

Die vorliegende Erfindung betrifft die Kontrolle des Verhaltens trainierbarer Bildklassifikatoren, die beispielsweise für die Qualitätskontrolle von in Serie gefertigten Produkten oder auch für das zumindest teilweise automatisierte Führen von Fahrzeugen genutzt werden können. Die Erfindung wird durch die angehängten Ansprüche definiert.

### Stand der Technik

Bei der Serienfertigung von Produkten ist es in der Regel erforderlich, die Qualität der Fertigung laufend zu überprüfen. Dabei wird angestrebt, Qualitätsprobleme möglichst schnell zu erkennen, um die Ursache baldmöglichst beheben zu können und nicht zu viele Einheiten des jeweiligen Produkts als Ausschuss zu verlieren.

Die optische Kontrolle der Geometrie und/oder Oberfläche eines Produkts ist schnell und zerstörungsfrei. Die WO 2018/197 074 A1 offenbart eine Prüfvorrichtung, in der ein Objekt einer Vielzahl von Beleuchtungssituationen ausgesetzt werden kann, wobei in jeder dieser Beleuchtungssituationen mit einer Kamera Bilder des Objekts aufgezeichnet werden. Aus diesen Bildern wird die Topographie des Objekts ausgewertet.

Bilder des Produkts können auch unmittelbar mit einem Bildklassifikator auf der Basis künstlicher neuronaler Netzwerke einer von mehreren Klassen einer vorgegebenen Klassifikation zugeordnet werden. Auf dieser Basis kann das Produkt einer von mehreren vorgegebenen Qualitätsklassen zugeordnet werden. Im einfachsten Fall ist diese Klassifikation binär ("OK"/"nicht OK").

Beim zumindest teilweise automatisierten Führen von Fahrzeugen werden ebenfalls trainierbare Bildklassifikatoren eingesetzt, um Verkehrssituationen zu bewerten oder zumindest auf ihren Gehalt an Objekten zu untersuchen.

Lukas Hoyer ET AL: "Grid Saliency for Context Explanations of Semantic Segmentation", online abrufbar: URL:https://arxiv.org/pdf/1907.13054.pdf , erweitern die bestehenden Ansätze zur Erzeugung von Grid-Saliencies, die räumlich kohärente visuelle Erklärungen für dichte Vorhersagenetzwerke (auf Pixelebene) liefern. Da die vorgeschlagene Rastersalienz es erlaubt, das Objekt und seinen Kontext räumlich zu entflechten, wird dieser Ansatz zur Erzeugung von Kontexterklärungen für semantische Segmentierungsnetzwerke übertragen, um herauszufinden, welcher Kontext die Klassenvorhersagen innerhalb eines Zielobjektbereichs am meisten diese Vorhersage beeinflusst.

### Offenbarung der Erfindung

Im Rahmen der Erfindung wurde ein Verfahren zur Messung der Anteile eines Eingabe-Bildes entwickelt, auf die ein Bildklassifikator seine Entscheidung über die Zuordnung dieses Eingabe-Bildes zu einer oder mehreren Klassen einer vorgegebenen Klassifikation stützt.

Bei diesem Verfahren wird das Eingabe-Bild von dem Bildklassifikator zunächst durch eine oder mehrere Faltungsschichten zu einem Zwischenprodukt verarbeitet. Dieses Zwischenprodukt ist im Vergleich zum Eingabe-Bild in der Dimensionalität deutlich reduziert und gibt Aktivierungen von Merkmalen an, die die Faltungsschichten bislang sukzessive in dem Eingabe-Bild erkannt haben. Je mehr Faltungsschichten an der Erstellung des Zwischenprodukts mitgewirkt haben, desto komplexer sind die Merkmale, deren Aktivierungen das Zwischenprodukt anzeigt. Das Zwischenprodukt kann beispielsweise eine Vielzahl von Merkmalskarten ("feature maps") umfassen, die jeweils durch das Anwenden von Filterkernen auf das Eingabe-Bild, bzw. auf ein zuvor schon aus dem Eingabe-Bild erzeugtes Zwischenprodukt, erzeugt wurden.

Das Zwischenprodukt gehört somit innerhalb des Bildklassifikators einem "latenten Raum" an. Es wird von dem Bildklassifikator auf einen Klassifikations-Score bezüglich mindestens einer Ziel-Klasse abgebildet.

Aus einem oder mehreren Gegen-Bildern, die von dem Bildklassifikator mindestens einer anderen Klasse als der Ziel-Klasse vorrangig zugeordnet werden, wird eine Störung im Raum der Zwischenprodukte ermittelt. Es wird nun mindestens eine binäre Maske bereitgestellt, die die gleiche Anzahl von Pixeln hat wie das Zwischenprodukt. Jedes dieser Pixel in der Maske kann nur zwei verschiedene Werte annehmen, also etwa 0 und 1 oder "Wahr" und "Falsch".

Aus dem Zwischenprodukt wird mindestens eine Abwandlung erstellt. In dieser Abwandlung sind durch die binäre Maske festgelegte Pixel durch hierzu korrespondierende Pixel der Störung ersetzt. Beispielsweise können alle Pixel, die in der Maske den Wert 0 bzw. "Falsch" haben, in der Abwandlung durch Pixel der Störung ersetzt werden.

Die Abwandlung wird von dem Bildklassifikator auf einen Klassifikations-Score bezüglich einer vorgegebenen Klasse abgebildet. Aus diesem Klassifikations-Score wird mit einer Gütefunktion ermittelt, in welchem Maße die binäre Maske die gesuchten entscheidungsrelevanten Anteile des Eingabe-Bildes angibt. Durch geeignete Wahl der Klasse, auf die sich der Klassifikations-Score der Abwandlung bezieht, und der Gütefunktion können unterschiedliche Aspekte der entscheidungsrelevanten Anteile des Eingabe-Bildes untersucht werden.

Wenn beispielsweise die vorgegebene Klasse, für die der Klassifikations-Score aus der Abwandlung ermittelt wird, die Ziel-Klasse ist, kann die Gütefunktion einen Vergleich dieses Klassifikations-Scores mit dem für das Zwischenprodukt ermittelten Klassifikations-Score beinhalten. Es können nun beispielsweise Masken bereitgestellt werden, die einen bestimmten kleinen Bereich des Zwischenprodukts unverändert lassen, während das Zwischenprodukt im Übrigen mit der Störung beaufschlagt wird. Hiermit kann dann etwa untersucht werden, ob der unveränderte Bereich dermaßen entscheidend für die Zuordnung des Zwischenprodukts zu der Ziel-Klasse ist, dass die Anwendung der Störung in den sonstigen Bereichen des Zwischenprodukts diese Zuordnung nicht mehr zu erschüttern vermag.

Es kann aber auch beispielsweise gezielt danach gefragt werden, mit welchen Veränderungen des Zwischenprodukts die Zuordnung des Zwischenprodukts von der Ziel-Klasse auf eine andere Klasse umgeschaltet werden kann. Wenn beispielsweise ein Bild eines Produkts, das im Rahmen einer Qualitätskontrolle des Produkts aufgenommen wurde, in die Klasse "nicht OK=NOK" eingestuft wurde, kann mit entsprechenden Masken danach gefragt werden, was man denn jetzt an diesem Bild ändern müsste, damit es in die Klasse "OK" eingestuft wird. Idealerweise sollten diese entscheidungsrelevanten Bereiche des Bildes zu konkreten Mängeln oder Schäden korrespondieren. Dies ist analog dazu, dass von einem menschlichen Kontrolleur auch erwartet wird, dass er für das Verschrotten des Produkts einen konkreten Grund benennt und nicht einfach nur behauptet, es hätte ihm "irgendwie nicht gefallen".

Wenn die vorgegebene Klasse nicht die Ziel-Klasse ist, kann insbesondere beispielsweise untersucht werden, mit welchen Veränderungen des Zwischenprodukts die Zuordnung des Zwischenprodukts von der Ziel-Klasse auf eine bestimmte von mehreren möglichen anderen Klassen umgeschaltet werden kann. Im Kontext der jeweiligen Anwendung können Fehlzuordnungen zu verschiedenen Klassen unterschiedlich schwerwiegende Folgen haben. Wenn beispielsweise ein System für das zumindest teilweise automatisierte Führen von Fahrzeugen Verkehrszeichen klassifiziert, ist die Falscherkennung eines "30 km/h"-Zeichens als "50 km/h"-Zeichen weniger schwerwiegend als die Falscherkennung des gleichen "30 km/h"-Zeichens als das Zeichen 301, das für die nächste Kreuzung oder Einmündung Vorfahrt erteilt. Wenn sich das Fahrzeug fälschlicherweise im Besitz der Vorfahrt wähnt, ist das Risiko für Zusammenstöße deutlich erhöht.

Bei diesen und anderen Untersuchungen ist es von besonderem Vorteil, dass die Störung aus einem oder mehreren Gegen-Bildern ermittelt wird. Es wurde erkannt, dass die Wirkstärke speziell dieser Art der Störung weniger von Spezifika des konkret im Bildklassifikator verwendeten Modells abhängt als dies für üblicherweise verwendete Störungen der Fall ist. Ein und dieselbe Abwandlung kann durchaus von zwei verschiedenen Bildklassifikatoren unterschiedlichen Klassen zugeordnet werden. Dennoch sind die für diese verschiedenen Bildklassifikatoren erzielten Ergebnisse sinnvoll quantitativ miteinander vergleichbar. Auf diese Weise kann beispielsweise die Analyse, welche Bereiche für verschiedene Bildklassifikatoren jeweils entscheidungsrelevant sind, ein Kriterium zur Auswahl eines von mehreren möglichen Bildklassifikatoren liefern.

Einfachere Störungen, wie etwa das Setzen von Pixeln auf Null in Bildklassifikatoren, die eine ReLU-Aktivierungsfunktion verwenden, oder das Setzen von Pixeln auf einen anderen einheitlichen Wert, sind in ihrer Wirkstärke hingegen modellabhängig. So kann beispielsweise die Einteilung eines Produkts in die Klasse "nicht OK=NOK" nicht nur durch das Vorhandensein von Mängeln oder Schäden veranlasst werden, die sich in Bildern als additive Features zeigen. Das Vorhandensein solcher Features in den Bildern zeigt sich in von Null verschiedenen Aktivierungen im Zwischenprodukt, so dass das Nullsetzen dieser Aktivierungen die entsprechenden Features entfernt. Es kann jedoch auch gerade umgekehrt das Fehlen bestimmter Merkmale den Anlass dafür liefern, das Produkt als "NOK" einzustufen. Beispielsweise kann der Herstellungsprozess eines Routers für den Heimgebrauch vorsehen, dass das Gerät mit einem Aufkleber versehen wird, der das für die Ersteinrichtung zu verwendende Passwort enthält. Bei der Endkontrolle ist es dann wichtig, dass sich dieser Aufkleber tatsächlich auf dem Gerät befindet, da das Gerät ohne ihn nicht nutzbar ist. Wenn also beim Anwenden einer Störung auf das Zwischenprodukt die Aktivierung des Merkmals "Aufkleber" auf Null gesetzt wird, wird nicht wie beabsichtigt Information aus dem Zwischenprodukt entfernt, sondern im Gegenteil eine sehr wichtige Information über einen Mangel des Produkts hinzugefügt.

Vorteilhaft wird ein Zwischenprodukt gewählt, das im Bildklassifikator von einer Klassifikatorschicht auf den mindestens einen Klassifikations-Score abgebildet wird. Gerade bei solchen Zwischenprodukten ist es in der beschriebenen Weise modellabhängig, wie sich das Setzen von Aktivierungen auf Null oder einen anderen einheitlichen Wert auswirkt.

Die Störung wird aus mindestens einem Zwischenprodukt gebildet werden, zu dem der Bildklassifikator ein oder mehrere Gegen-Bilder verarbeitet. Dies kann in der Abwandlung des Zwischenprodukts sowohl zur Aktivierung zusätzlicher Merkmale als auch zur Deaktivierung von Merkmalen führen. Die Störung kann insbesondere beispielsweise durch Mittelung oder Bildung einer sonstigen zusammenfassenden Statistik über mehrere Zwischenprodukte, zu denen der Bildklassifikator unterschiedliche Gegen-Bilder verarbeitet, gebildet werden.

Aus mehreren Gegen-Bildern wird mindestens ein Gegen-Bild ausgewählt, für welches das durch den Bildklassifikator gebildete Zwischenprodukt dem aus dem Eingabe-Bild gebildeten Zwischenprodukt nach Maßgabe eines vorgegebenen Distanzmaßes am nächsten kommt. Als Distanzmaß wird die Cosinus-Distanz zwischen Vektoren, die die Pixelwerte der jeweiligen Zwischenprodukte enthalten, genutzt. Die Störung ist dann realistischer und enthält weniger semantische Fehler, wie etwa Gegenstände, die nach dem Entfernen des Tisches, auf dem sie zuvor lagen, frei in der Luft schweben.

In einer weiteren besonders vorteilhaften Ausgestaltung wird eine Vielzahl binärer Masken bereitgestellt. Aus der Gesamtheit der Masken und zugehörigen Bewertungen durch die Gütefunktion werden die gesuchten entscheidungsrelevanten Anteile des Eingabe-Bildes ermittelt. Dies kann beispielsweise beinhalten, jedem Pixel des Eingabe-Bildes eine Bewertungszahl zuzuordnen, die angibt, wie entscheidungsrelevant dieses konkrete Pixel ist. Die Vielzahl binärer Masken kann beispielsweise aus einer Zufallsverteilung, etwa einer Bernoulli-Verteilung, gezogen werden.

Bei diesem Vorgehen müssen auch binäre Masken mit mäßigen oder schlechten Bewertungen durch die Gütefunktion nicht einfach verworfen werden. Stattdessen können alle insgesamt untersuchten Masken in das letztendlich gebildete Endergebnis eingehen. Schließlich bewirkt das Aggregieren über eine Anzahl zufällig gezogener binärer Masken auch, dass ein Teil der Zufälligkeit in den Masken wieder herausgemittelt wird.

Vorteilhaft wird für die Bewertung jeder Maske mindestens ein Gegen-Bild zufällig gewählt. Dies macht das letztendlich aggregierte Ergebnis unabhängig von der Auswahl bestimmter Gegen-Bilder.

In einer weiteren besonders vorteilhaften Ausgestaltung wird ein entscheidungsrelevanter Anteil des Eingabe-Bildes aus einer Summe binärer Masken, die jeweils mit den Bewertungen dieser binären Masken durch die Gütefunktion gewichtet sind, ausgewertet.

Sei x ein Eingabe-Bild und f_{L} (x) ein hieraus vom Bildklassifikator erzeugtes Zwischenprodukt im latenten Raum. Eine Abwandlung x'_{L} dieses Zwischenprodukts wird mit einer binären Maske m und einer anhand des Eingabe-Bildes x festgelegten Störung P_{L}(x) im latenten Raum geschrieben als ${x}_{L}^{′} = {f}_{L} \left(x\right) ⊙ m + {P}_{L} \left(x\right) ⊙ \left(1-m\right) .$

Die Gütebewertung R_{x,f}(m) einer jeden Maske m entspricht dem Klassifikations-Score f_{c}, den der Bildklassifikator dieser Abwandlung x'_{L} zuordnet: ${R}_{x , f} \left(m\right) = {f}_{c} \left({x}_{L}^{′}\right) .$

Wenn N binäre Masken mi im Raum der Zwischenprodukte gezogen werden, kann eine Bewertungszahl S(λ) beispielsweise geschrieben werden als ${S}_{x , f} \left(λ\right) \approx \frac{1}{E \left[m\right] ⋅ N} {\sum }_{i = 1}^{N} {R}_{x , f} \left({m}_{i}\right) ⋅ {m}_{i} \left(λ\right) .$

Hierin bezeichnet der Index f den Bildklassifikator.

Aus einer oder mehreren binären Masken wird ein ermittelter entscheidungsrelevanter Anteil des Zwischenprodukts durch Interpolation oder sonstiges Upsampling in den gesuchten entscheidungsrelevanten Anteil des Eingabe-Bildes überführt. Hierbei wird die räumliche Korrespondenz zwischen dem Zwischenprodukt und dem Eingabe-Bild ausgenutzt.

In einer besonders vorteilhaften Ausgestaltung wird ein Bild eines in Serie gefertigten Produkts als Eingabe-Bild gewählt. Die Klassen der Klassifikation repräsentieren dann eine Qualitätsbewertung des Produkts, wie beispielsweise "OK", "nicht OK = NOK", "keine Entscheidung möglich" oder auch beliebige Abstufungen dazwischen. In diesem Zusammenhang sind insbesondere Erklärungen dafür, warum der Bildklassifikator ein Eingabe-Bild der Klasse "NOK" zuordnet, wichtig. Hier werden Bilder, die vom Bildklassifikator der Klasse "OK" zugeordnet werden, als Gegen-Bilder genutzt. Bei der Serienfertigung von Produkten sind grundsätzlich alle Bilder, also sowohl die "OK"-Bilder als auch die "NOK"-Bilder, zueinander sehr ähnlich, da der Fertigungsprozess ja normalerweise sehr reproduzierbare Ergebnisse liefert. Dementsprechend sind auch die Aktivierungen in den aus diesen Bildern gewonnenen Zwischenprodukten zueinander sehr ähnlich. Das hier vorgestellte Verfahren liefert sehr spezifische Erklärungen der Unterschiede zwischen "OK"-Bildern und "NOK"-Bildern.

Mit solchen Erklärungen lässt sich nicht nur der Bildklassifikator selbst verbessern, sondern es lassen sich auch Erkenntnisse über die mögliche Ursache des Qualitätsproblems gewinnen, die im Fertigungsprozess gesetzt wurde. Wenn beispielsweise eine Vielzahl kleiner lokalisierter Defekte am Produkt für die Einstufung als "NOK" ausschlaggebend waren und diese Defekte wiederum mit bestimmten physikalischen Bedingungen während der Herstellung des Produkts korreliert sind (wie etwa hohe Temperatur oder hoher Druck), kann gezielt darauf hingewirkt werden, diese Bedingungen zu korrigieren, damit künftig ein größerer Anteil der hergestellten Produktexemplare als "OK" eingestuft wird.

Die ermittelten Anteile des Eingabe-Bildes, auf die der Bildklassifikator seine Entscheidung stützt, können insbesondere beispielsweise mit einem Anteil des Eingabe-Bildes verglichen werden, der anhand einer Beobachtung des gleichen Produkts mit einer anderen Abbildungsmodalität als relevant für die Qualitätsbewertung des Produkts ermittelt wurde. Aus dem Ergebnis dieses Vergleichs kann dann eine Qualitätsbewertung für den Bildklassifikator ermittelt werden. Beispielsweise können Hyperparameter des Bildklassifikators optimiert werden mit dem Ziel, diese Qualitätsbewertung zu optimieren.

In einer weiteren besonders vorteilhaften Ausgestaltung wird ein von einem Fahrzeug aus aufgenommenes Bild einer Verkehrssituation als Eingabe-Bild gewählt. Die Klassen der Klassifikation repräsentieren dann Bewertungen der Verkehrssituation, auf deren Basis das künftige Verhalten des Fahrzeugs geplant wird. Gerade in diesem Anwendungsfeld kann dem Bildklassifikator und einem nachgeschalteten Warnsystem, Fahrassistenzsystem oder System zum zumindest teilweise automatisierten Fahren häufig nur unter der Voraussetzung vertraut werden, dass die Entscheidungen des Bildklassifikators erklärbar sind. Das Verfahren kann genau diese Erklärungen liefern.

Beispielsweise kann ein Erkennungssystem für Fußgänger erkennen, ob die Verkehrssituation im Eingabe-Bild einen Fußgänger enthält (Ausgabe 1) oder ob diese Verkehrssituation keinen Fußgänger enthält (Ausgabe 0). Wenn nun beispielsweise ein Eingabe-Bild laut Bildklassifikator keinen Fußgänger enthält, können dem aus diesem Eingabe-Bild erstellen Zwischenprodukt an verschiedenen Stellen "Fußgänger-Aktivierungen" hinzugefügt werden, um zu studieren, wie das Verhalten des Bildklassifikators sich ändert.

In diesem Zusammenhang ist es besonders vorteilhaft, dass die Abwandlungen durch Veränderungen des Zwischenprodukts erzeugt werden und nicht durch Veränderungen des Eingabe-Bildes selbst. Es ist deutlich einfacher, eine "Fußgänger-Aktivierung" im latenten Raum der Zwischenprodukte einzufügen, als durch pixelweise Änderung des Eingabe-Bildes eine Abwandlung zu erzeugen, die einen zusätzlichen Fußgänger enthält und immer noch realistisch aussieht. Das hier vorgestellte Verfahren ist also generell ein einfacherer Weg, um neue Datenpunkte zu testen, die mit einem Generative Adversarial Network, GAN, oder einem anderen generativen Modell erzeugt wurden.

Die ermittelten Anteile des Eingabe-Bildes, auf die der Bildklassifikator seine Entscheidung stützt, können insbesondere beispielsweise mit einem Anteil des Eingabe-Bildes verglichen werden, der als für die Beurteilung der Verkehrssituation relevant bekannt ist. Aus dem Ergebnis dieses Vergleichs kann dann eine Qualitätsbewertung für den Bildklassifikator ermittelt werden. Analog zum Anwendungsbeispiel der Qualitätskontrolle von in Serie gefertigten Produkten können dann beispielsweise Hyperparameter des Bildklassifikators optimiert werden mit dem Ziel, dass die Qualität des Bildklassifikators danach besser bewertet wird.

Die Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zur Messung entscheidungsrelevanter Anteile 2a eines Eingabe-Bildes 2;
Figur 2 Veranschaulichung der Problematik, dass im latenten Raum auch das Deaktivieren von Features Information hinzufügen kann.

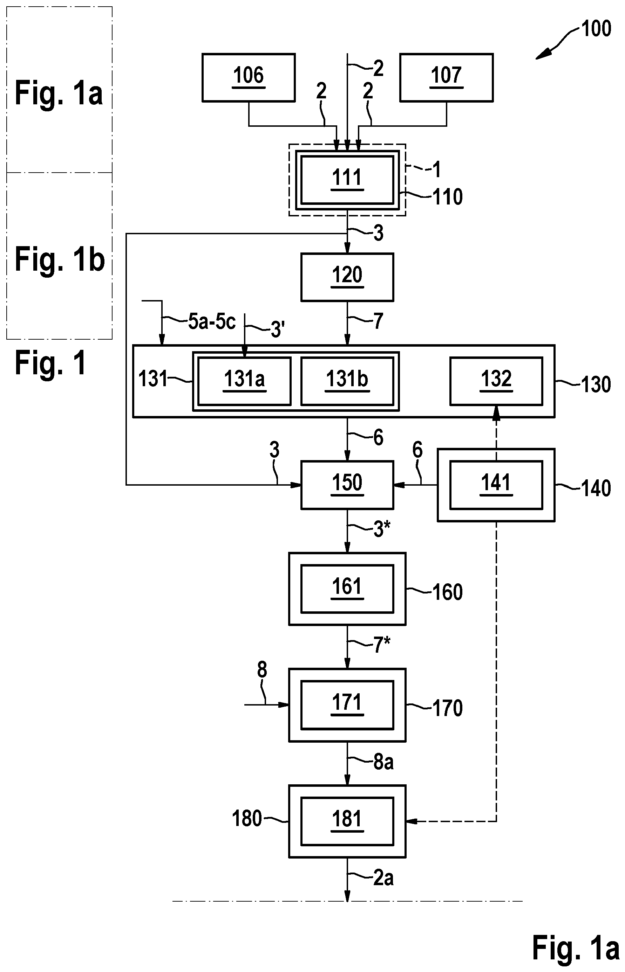

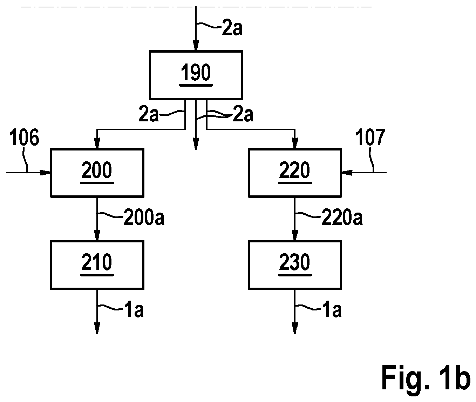

Figur 1 ist ein schematisches Ablaufdiagramm eines Ausführungsbeispiels des Verfahrens 100 zur Messung der Anteile 2a eines Eingabe-Bildes 2 ein Bildklassifikator 1 seine Entscheidung über die Zuordnung dieses Eingabe-Bildes 2 zu einer oder mehreren Klassen einer vorgegebenen Klassifikation stützt. Das Eingabe-Bild 2 kann optional gemäß Block 106 ein Bild eines in Serie gefertigten Produkts oder gemäß Block 107 ein Bild einer Verkehrssituation sein.

In Schritt 110 wird das Eingabe-Bild 2 von dem Bildklassifikator 1 durch eine oder mehrere Faltungsschichten zu einem Zwischenprodukt 3 verarbeitet. Dabei kann vorteilhaft gemäß Block 111 ein Zwischenprodukt 3 gewählt werden, das im Bildklassifikator 1 von einer Klassifikatorschicht auf den mindestens einen Klassifikations-Score 7 abgebildet wird. Das Zwischenprodukt 3 kann insbesondere beispielsweise bis zur Verarbeitung durch die Klassifikatorschicht von keiner weiteren Faltungsschicht verarbeitet werden.

In Schritt 120 wird das Zwischenprodukt 3 von dem Bildklassifikator 1 auf einen Klassifikations-Score 7 bezüglich mindestens einer Ziel-Klasse abgebildet.

In Schritt 130 wird aus einem oder mehreren Gegen-Bildern 5a-5c, die von dem Bildklassifikator 1 mindestens einer anderen Klasse als der Ziel-Klasse vorrangig zugeordnet werden, eine Störung 6 im Raum der Zwischenprodukte 3 ermittelt. In Schritt 140 wird mindestens eine binäre Maske 4 bereitgestellt, die die gleiche Anzahl von Pixeln hat wie das Zwischenprodukt 3. Die binäre Maske 4 und die Störung 6 werden in Schritt 150 zusammengeführt: Aus dem Zwischenprodukt 3 wird mindestens eine Abwandlung 3* erstellt, in der durch die binäre Maske 4 festgelegte Pixel durch hierzu korrespondierende Pixel der Störung 6 ersetzt sind.

Hierbei kann gemäß Block 131 insbesondere beispielsweise die Störung 6 aus mindestens einem Zwischenprodukt 3' gebildet, zu dem der Bildklassifikator 1 ein oder mehrere Gegen-Bilder 5a-5c verarbeitet.

Beispielsweise kann gemäß Block 131a die Störung 6 durch Mittelung oder Bildung einer sonstigen zusammenfassenden Statistik über mehrere Zwischenprodukte 3', zu denen der Bildklassifikator 1 unterschiedliche Gegen-Bilder 5a-5c verarbeitet, gebildet werden.

Beispielsweise können gemäß Block 131b aus mehreren Gegen-Bildern 5a-5c mindestens ein Gegen-Bild 5a-5c ausgewählt werden, für welches das durch den Bildklassifikator 1 gebildete Zwischenprodukt 3' dem aus dem Eingabe-Bild 2 gebildeten Zwischenprodukt 3 nach Maßgabe eines vorgegebenen Distanzmaßes am nächsten kommt.

Gemäß Block 132 kann, sofern mehrere Masken 4 genutzt werden, für die Bewertung jeder Maske 4 mindestens ein Gegen-Bild 5a-5c zufällig ausgewählt werden, damit das letztendlich erhaltene Ergebnis nicht zu stark an einzelne Gegen-Bilder 5a-5c gebunden ist.

In Schritt 160 wird die Abwandlung 3* von dem Bildklassifikator 1 auf einen Klassifikations-Score 7* bezüglich einer vorgegebenen Klasse abgebildet. In Schritt 170 wird aus diesem Klassifikations-Score 7* wird mit einer Gütefunktion 8 ermittelt, in welchem Maße 8a die binäre Maske 4 die gesuchten entscheidungsrelevanten Anteile 2a des Eingabe-Bildes 2 angibt. Das Maß 8a ist somit der Wert der Gütefunktion 8 für die konkrete binäre Maske 4.

Die vorgegebene Klasse, für die der Klassifikations-Score 7* aus der Abwandlung 3* ermittelt wird, kann gemäß Block 161 insbesondere beispielsweise die Ziel-Klasse sein. Die Gütefunktion 8 kann dann gemäß Block 171 einen Vergleich dieses Klassifikations-Scores 7* mit dem für das Zwischenprodukt 3 ermittelten Klassifikations-Score 7 beinhalten.

Gemäß Block 141 kann eine Vielzahl binärer Masken 4 bereitgestellt werden. Es können dann in Schritt 180 aus der Gesamtheit der Masken 4 und zugehörigen Bewertungen 8a durch die Gütefunktion 8 die gesuchten entscheidungsrelevanten Anteile 2a des Eingabe-Bildes 2 ermittelt werden.

Sofern der entscheidungsrelevante Anteil zuvor noch im Raum des Zwischenprodukts ermittelt wurde, kann er in Schritt 190 durch Interpolation oder sonstiges Upsampling in den gesuchten entscheidungsrelevanten Anteil 2a des Eingabe-Bildes 2 überführt werden.

Insoweit die entscheidungsrelevanten Anteile 2a gemäß Block 106 anhand eines Eingabe-Bildes 2 ermittelt wurden, das ein in Serie gefertigtes Produkt zeigt, können diese Anteile 2a in Schritt 200 mit einem Anteil 2b des Eingabe-Bildes verglichen werden, der anhand einer Beobachtung des gleichen Produkts mit einer anderen Abbildungsmodalität als relevant für die Qualitätsbewertung des Produkts ermittelt wurde. Aus dem Ergebnis 200a dieses Vergleichs 200 kann dann in Schritt 210 eine Qualitätsbewertung 1a für den Bildklassifikator 1 ermittelt werden.

Insoweit die entscheidungsrelevanten Anteile 2a gemäß Block 107 anhand eines Eingabe-Bildes 2 ermittelt wurden, das eine Verkehrssituation zeigt, können diese Anteile 2a in Schritt 220 mit einem Anteil 2b des Eingabe-Bildes verglichen werden, der als für die Beurteilung der Verkehrssituation relevant bekannt ist. Aus dem Ergebnis 220a dieses Vergleichs 220 kann dann in Schritt 230 eine Qualitätsbewertung 1a für den Bildklassifikator 1 ermittelt werden.

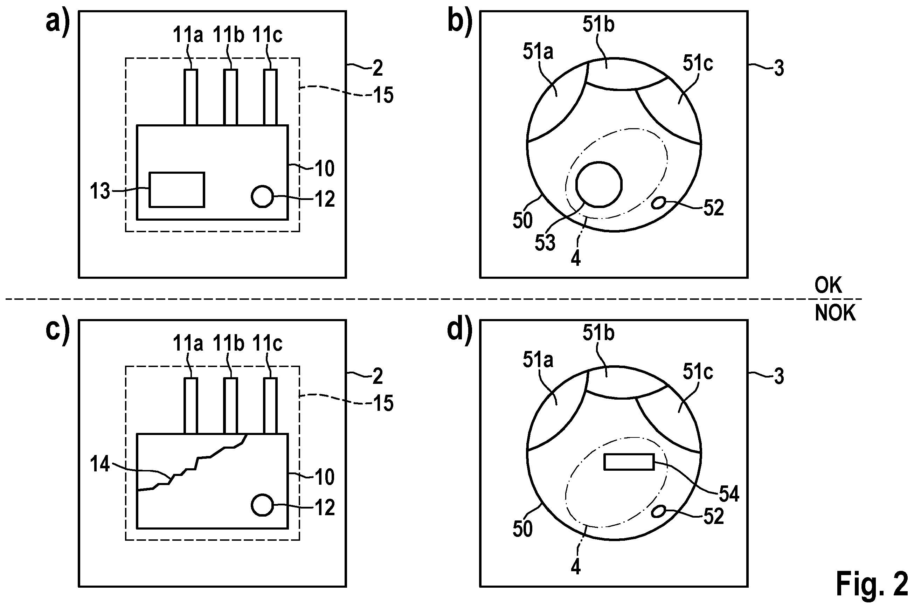

Figur 2 verdeutlicht den Zusammenhang zwischen Bildmerkmalen, die für die Qualitätsbeurteilung eines Produkts relevant sind, und Aktivierungen von Merkmalen in einem aus dem Eingabe-Bild 2 erhaltenen Zwischenprodukt 3 im latenten Raum.

Teilbild a) ist ein Eingabe-Bild 2, das einen WLAN-Router 15 für den Heimgebrauch zeigt. Bei einer äußerlichen Sichtprüfung des Routers 15 sind normalerweise ein Gehäuse 10, drei Antennen 11a-11c, eine LED 12 und ein Aufkleber 13 mit dem Passwort für die Erstinbetriebnahme sichtbar. In Teilbild a) sind alle diese Komponenten auch tatsächlich vorhanden, so dass ein für die Qualitätskontrolle eingesetzter Bildklassifikator 1 dieses Eingabe-Bild 2 in die Klasse "OK" einsortieren sollte. Teilbild b) zeigt das auf dem Weg zu dieser Beurteilung erhaltene Zwischenprodukt 3 im latenten Raum. Aktivierungen 50, 51a-51c, 52 und 53 korrespondieren zu den Bildmerkmalen 10, 11a-11c, 12 bzw. 13.

Teilbild c) ist ein Eingabe-Bild 2, das einen aus zwei Gründen fehlerhaften Router 15 zeigt. Zum einen weist das Gehäuse 10 einen großen Riss 14 auf. Zum anderen fehlt der Aufkleber 13, ohne den die Erstinbetriebnahme nicht möglich und der ganze Router 15 nutzlos ist. Jeder dieser Mängel ist für sich genommen Grund genug dafür, dass der Router 15 nicht mehr verkaufsfähig ist. Daher wird dieses Eingabe-Bild 2 vom Bildklassifikator 1 in die Klasse "nicht OK=NOK" einsortiert. Teilbild d) ist das auf dem Weg zu dieser Beurteilung entstandene Zwischenprodukt 3 im latenten Raum. Hier ist im Vergleich zu Teilbild b) noch eine Aktivierung 54 hinzugekommen, die zu dem Riss 14 im Gehäuse 10 korrespondiert. Zugleich fehlt die Aktivierung 53, die zum Aufkleber 13 korrespondiert.

Das bedeutet, dass im Zwischenprodukt 3 gemäß Teilbild b) das Nullsetzen der Aktivierung 53, die zu dem Aufkleber 13 korrespondiert, nicht nur ein unkritisches "Zurücksetzen" von Information auf einen Standardzustand "keine Information" bedeutet. Vielmehr wird hierdurch die Information hinzugefügt, dass der Router 15 einen schwerwiegenden Mangel aufweist, der die Inbetriebnahme verhindert.

Noch deutlicher ist dieser Effekt in der inversen Situation, in der das Training des Bildklassifikators 1 dahingehend konvergiert ist, dass eine Aktivierung 53 von Null das Vorhandensein des Aufklebers 13 anzeigt und eine von Null verschiedene Aktivierung 53 (etwa 1) das Fehlen des Aufklebers 13 anzeigt. Wenn nun ein Eingabe-Bild 2 eines Routers 15 mit Aufkleber 13 dahingehend untersucht werden soll, warum dieser Router 15 als "OK" eingestuft wurde, kann mit dem herkömmlichen Nullsetzen von Aktivierungen nicht erkannt werden, dass der Aufkleber 13 etwas mit der Qualität des Routers 15 zu tun hat. Die Aktivierung 53 ist bereits Null, d.h., eine entsprechende Störung 6 bewirkt nichts.

Das hier vorgeschlagene Verfahren ermittelt die Störung 6 auf der Basis von Gegen-Bildern 5a-5c. Damit ist es nicht mehr von der Kodierung einzelner Merkmale im Zwischenprodukt 3 abhängig, ob die Störung 6 das Zwischenprodukt 3 überhaupt verändert. Nur mit einer Störung 6, die das Zwischenprodukt 3 verändert, können entscheidungsrelevante Anteile 2a des Eingabe-Bildes 2 ermittelt werden.

In den Teilbildern b) und d) ist eine beispielhafte Maske 4 eingezeichnet, die ein mögliches entscheidungsrelevantes Gebiet im Zwischenprodukt 3 abgrenzt. Die im Rahmen des Verfahrens 100 genutzte Störung 6 kann beispielsweise beinhalten, das gemäß der Maske 4 ausgezeichnete Gebiet aus einem zu einem Gegen-Bild 5a-5c gehörenden Zwischenprodukt 3 in die aus dem aktuellen Zwischenprodukt 3 gebildete Abwandlung 3* zu kopieren.

## Patentansprüche

1. Verfahren (100) zur Messung der Anteile (2a) eines Eingabe-Bildes (2), auf die ein Bildklassifikator (1) seine Entscheidung über die Zuordnung dieses Eingabe-Bildes (2) zu einer oder mehreren Klassen einer vorgegebenen Klassifikation stützt, mit den Schritten:
• das Eingabe-Bild (2) wird von dem Bildklassifikator (1) durch eine oder mehrere Faltungsschichten zu einem Zwischenprodukt (3) verarbeitet (110);
• das Zwischenprodukt (3) wird von dem Bildklassifikator (1) auf einen Klassifikations-Score (7) bezüglich mindestens einer Ziel-Klasse abgebildet (120);
• aus einem oder mehreren Gegen-Bildern (5a-5c), die von dem Bildklassifikator (1) mindestens einer anderen Klasse als der Ziel-Klasse vorrangig zugeordnet werden, wird eine Störung (6) im Raum der Zwischenprodukte (3) ermittelt (130),
wobei die Störung (6) aus mindestens einem Zwischenprodukt (3') gebildet wird (131), zu dem der Bildklassifikator (1) ein oder mehrere Gegen-Bilder (5a-5c) verarbeitet,
wobei aus mehreren Gegen-Bildern mindestens ein Gegen-Bild ausgewählt wird, für welches das durch den Bildklassifikator gebildete Zwischenprodukt dem aus dem Eingabe-Bild gebildeten Zwischenprodukt nach Maßgabe eines vorgegebenen Distanzmaßes am nächsten kommt, wobei als Distanzmaß eine Cosinus-Distanz zwischen Vektoren, die die Pixelwerte der jeweiligen Zwischenprodukte enthalten, genutzt wird;
• es wird mindestens eine binäre Maske (4) bereitgestellt (140), die die gleiche Anzahl von Pixeln hat wie das Zwischenprodukt (3);
• aus dem Zwischenprodukt (3) wird mindestens eine Abwandlung (3*) erstellt (150), in der durch die binäre Maske (4) festgelegte Pixel durch hierzu korrespondierende Pixel der Störung (6) ersetzt sind,
wobei ein aus einer oder mehreren binären Masken (4) ermittelter entscheidungsrelevanter Anteil des Zwischenprodukts (3) durch Interpolation oder sonstiges Upsampling in den gesuchten entscheidungsrelevanten Anteil (2a) des Eingabe-Bildes (2) überführt wird (190), wobei die eine Abwandlung (3*) x'_{L} mit der binären Maske m und einer anhand des Eingabe-Bildes x festgelegten Störung P_{L}(x) geschrieben werden als: ${x}_{L}^{′} = {f}_{L} \left(x\right) ⊙ m + {P}_{L} \left(x\right) ⊙ \left(1-m\right)$, wobei x das Eingabe-Bild (2),und f_{L} (x) ein hieraus vom Bildklassifikator (1) erzeugtes Zwischenprodukt (3) im latenten Raum ist;
• die Abwandlung (3*) wird von dem Bildklassifikator (1) auf einen Klassifikations-Score (7*) bezüglich einer vorgegebenen Klasse abgebildet (160);
• aus diesem Klassifikations-Score (7*) wird mit einer Gütefunktion (8) ermittelt (170), in welchem Maße (8a) die binäre Maske (4) die gesuchten entscheidungsrelevanten Anteile (2a) des Eingabe-Bildes (2) angibt,
wobei eine Gütebewertung R_{x,f}(m) einer jeden Maske m mit einem Klassifikations-Score f_{c} entsprechen, den der Bildklassifikator (1) dieser Abwandlung x'_{L} zuordnet: ${R}_{x , f} \left(m\right) = {f}_{c} \left({x}_{L}^{′}\right)$, wobei wenn N binäre Masken *mᵢ* im Raum der Zwischenprodukte gezogen werden, wird eine Bewertungszahl S(λ) beispielsweise geschrieben werden als: ${S}_{x , f} \left(λ\right) \approx \frac{1}{E \left[m\right] ⋅ N} {\sum }_{i = 1}^{N} {R}_{x , f} \left({m}_{i}\right) ⋅ {m}_{i} \left(λ\right)$., wobei Index f den Bildklassifikator (1) bezeichnet.

2. Verfahren (100) nach Anspruch 1, wobei ein Zwischenprodukt (3) gewählt wird (111), das im Bildklassifikator (1) von einer Klassifikatorschicht auf den mindestens einen Klassifikations-Score (7) abgebildet wird.

3. Verfahren (100) nach Anspruch 1 oder 2, wobei die Störung (6) durch Mittelung oder Bildung einer sonstigen zusammenfassenden Statistik über mehrere Zwischenprodukte (3'), zu denen der Bildklassifikator (1) unterschiedliche Gegen-Bilder (5a-5c) verarbeitet, gebildet wird (131a).

4. Verfahren (100) nach einem der Ansprüche 1 bis 3, wobei aus mehreren Gegen-Bildern (5a-5c) mindestens ein Gegen-Bild (5a-5c) ausgewählt wird (131b), für welches das durch den Bildklassifikator (1) gebildete Zwischenprodukt (3') dem aus dem Eingabe-Bild (2) gebildeten Zwischenprodukt (3) nach Maßgabe eines vorgegebenen Distanzmaßes am nächsten kommt.

5. Verfahren (100) nach einem der Ansprüche 1 bis 4, wobei eine Vielzahl binärer Masken (4) bereitgestellt wird (141) und wobei aus der Gesamtheit der Masken (4) und zugehörigen Bewertungen (8a) durch die Gütefunktion (8) die gesuchten entscheidungsrelevanten Anteile (2a) des Eingabe-Bildes (2) ermittelt werden (180).

6. Verfahren (100) nach Anspruch 5, wobei für die Bewertung jeder Maske (4) mindestens ein Gegen-Bild (5a-5c) zufällig ausgewählt wird (132).

7. Verfahren (100) nach einem der Ansprüche 5 bis 6, wobei ein entscheidungsrelevanter Anteil (2a) des Eingabe-Bildes (2) aus einer Summe binärer Masken (4), die jeweils mit den Bewertungen (8a) dieser binären Masken (4) durch die Gütefunktion (8) gewichtet sind, ausgewertet wird (181).

8. Verfahren (100) nach einem der Ansprüche 1 bis 7, wobei die vorgegebene Klasse, für die der Klassifikations-Score (7*) aus der Abwandlung (3*) ermittelt wird, die Ziel-Klasse ist (161) und wobei die Gütefunktion (8) einen Vergleich dieses Klassifikations-Scores (7*) mit dem für das Zwischenprodukt (3) ermittelten Klassifikations-Score (7) beinhaltet (171).

9. Verfahren (100) nach einem der Ansprüche 1 bis 8, wobei ein Bild eines in Serie gefertigten Produkts als Eingabe-Bild (2) gewählt wird (106) und wobei die Klassen der Klassifikation eine Qualitätsbewertung des Produkts repräsentieren.

10. Verfahren (100) nach Anspruch 9, wobei die ermittelten Anteile (2a) des Eingabe-Bildes (2), auf die der Bildklassifikator (1) seine Entscheidung stützt, mit einem Anteil (2b) des Eingabe-Bildes (2) verglichen werden (200), der anhand einer Beobachtung des gleichen Produkts mit einer anderen Abbildungsmodalität als relevant für die Qualitätsbewertung des Produkts ermittelt wurde, und wobei aus dem Ergebnis (200a) dieses Vergleichs (200) eine Qualitätsbewertung (1a) für den Bildklassifikator (1) ermittelt wird (210).

11. Verfahren (100) nach einem der Ansprüche 1 bis 8, wobei ein von einem Fahrzeug aus aufgenommenes Bild einer Verkehrssituation als Eingabe-Bild (2) gewählt wird (107) und wobei die Klassen der Klassifikation Bewertungen der Verkehrssituation (50) repräsentieren, auf deren Basis das künftige Verhalten des Fahrzeugs geplant wird.

12. Verfahren (100) nach Anspruch 11, wobei die ermittelten Anteile (2a) des Eingabe-Bildes (2), auf die der Bildklassifikator (1) seine Entscheidung stützt, mit einem Anteil (2b) des Eingabe-Bildes (2) verglichen werden (220), der als für die Beurteilung der Verkehrssituation relevant bekannt ist, und wobei aus dem Ergebnis (220a) dieses Vergleichs eine Qualitätsbewertung (1a) für den Bildklassifikator (1) ermittelt wird (230).

13. Computerprogramm, enthaltend maschinenlesbare Anweisungen, die, wenn sie auf einem oder mehreren Computern ausgeführt werden, den oder die Computer dazu veranlassen, das Verfahren (100) nach einem der Ansprüche 1 bis 12 auszuführen.

14. Maschinenlesbarer Datenträger und/oder Downloadprodukt mit dem Computerprogramm nach Anspruch 13.

15. Computer mit dem Computerprogramm nach Anspruch 13, und/oder mit dem maschinenlesbaren Datenträger und/oder Downloadprodukt nach Anspruch 14.

## Claims

1. Method (100) for measuring the portions (2a) of an input image (2) on which an image classifier (1) bases its decision regarding the assignment of this input image (2) to one or more classes of a predefined classification, comprising the following steps:
• the input image (2) is processed (110) to form an intermediate product (3) by the image classifier (1) using one or more convolutional layers;
• the intermediate product (3) is mapped (120) onto a classification score (7) with respect to at least one target class by the image classifier (1);
• a disturbance (6) in the space of the intermediate products (3) is determined (130) from one or more counter-images (5a-5c) which are assigned with priority to at least one class other than the target class by the image classifier (1),
wherein the disturbance (6) is formed (131) from at least one intermediate product (3') resulting from the processing of one or more counter-images (5a-5c) by the image classifier (1),
wherein, from a plurality of counter-images, at least one counter-image is selected for which the intermediate product formed by the image classifier comes closest to the intermediate product formed from the input image according to a predefined distance measure, wherein a cosine distance between vectors containing the pixel values of the respective intermediate products is used as distance measure;
• at least one binary mask (4) is provided (140) which has the same number of pixels as the intermediate product (3);
• from the intermediate product (3), at least one modification (3*) is created (150) in which pixels defined by the binary mask (4) are replaced with pixels of the disturbance (6) that correspond thereto,
wherein a decision-relevant portion of the intermediate product (3) determined from one or more binary masks (4) is converted (190) into the sought decision-relevant portion (2a) of the input image (2) by interpolation or other upsampling, the one modification (3*) x'_{L} being written with the binary mask m and a disturbance P_{L}(x) defined on the basis of the input image x as: ${x}_{L}^{′} = {f}_{L} \left(x\right) ⊙ m + {P}_{L} \left(x\right) ⊙ \left(1-m\right)$, where x is the input image (2), and f_{L} (x) is an intermediate product (3) generated therefrom by the image classifier (1) in the latent space;
• the modification (3*) is mapped (160) onto a classification score (7*) with respect to a predefined class by the image classifier (1);
• from this classification score (7*), a quality function (8) is used to determine (170) to what extent (8a) the binary mask (4) indicates the sought decision-relevant portions (2a) of the input image (2),
wherein a quality assessment R_{x,f}(m) of each mask m corresponds to a classification score f_{c} assigned to this modification x'_{L} by the image classifier (1): ${R}_{x , f} \left(m\right) = {f}_{c} \left({x}_{L}^{′}\right)$, wherein if N binary masks *mᵢ* are drawn in the space of the intermediate products, an assessment number S(λ) will be written for example as: ${S}_{x , f} \left(λ\right) \approx \frac{1}{E \left[m\right] ⋅ N} {\sum }_{i = 1}^{N} {R}_{x , f} \left({m}_{i}\right) ⋅ {m}_{i} \left(λ\right)$., where index f denotes the image classifier (1).

2. Method (100) according to Claim 1, wherein an intermediate product (3) is chosen (111) which is mapped onto the at least one classification score (7) in the image classifier (1) by a classifier layer.

3. Method (100) according to Claim 1 or 2, wherein the disturbance (6) is formed (131a) by averaging or forming some other summarizing statistic over a plurality of intermediate products (3') resulting from the processing of different counter-images (5a-5c) by the image classifier (1).

4. Method (100) according to any of Claims 1 to 3, wherein, from a plurality of counter-images (5a-5c), at least one counter-image (5a-5c) is selected (131b) for which the intermediate product (3') formed by the image classifier (1) comes closest to the intermediate product (3) formed from the input image (2) according to a predefined distance measure.

5. Method (100) according to any of Claims 1 to 4, wherein a multiplicity of binary masks (4) are provided (141) and wherein the sought decision-relevant portions (2a) of the input image (2) are determined (180) from the totality of the masks (4) and associated assessments (8a) by the quality function (8).

6. Method (100) according to Claim 5, wherein at least one counter-image (5a-5c) is randomly selected (132) for the assessment of each mask (4).

7. Method (100) according to any of Claims 5 to 6, wherein a decision-relevant portion (2a) of the input image (2) is evaluated (181) from a sum of binary masks (4), each weighted with the assessments (8a) of these binary masks (4) by the quality function (8).

8. Method (100) according to any of Claims 1 to 7, wherein the predefined class for which the classification score (7*) is determined from the modification (3*) is (161) the target class and wherein the quality function (8) includes (171) a comparison of this classification score (7*) with the classification score (7) determined for the intermediate product (3).

9. Method (100) according to any of Claims 1 to 8, wherein an image of a series-manufactured product is chosen (106) as input image (2) and wherein the classes of the classification represent a quality assessment of the product.

10. Method (100) according to Claim 9, wherein the determined portions (2a) of the input image (2) on which the image classifier (1) bases its decision are compared (200) with a portion (2b) of the input image (2) which was determined as relevant for the quality assessment of the product on the basis of an observation of the same product with a different mapping modality, and wherein a quality assessment (1a) for the image classifier (1) is determined (210) from the result (200a) of this comparison (200).

11. Method (100) according to any of Claims 1 to 8, wherein an image of a traffic situation recorded from a vehicle is chosen (107) as input image (2) and wherein the classes of the classification represent assessments of the traffic situation (50), on the basis of which the future behaviour of the vehicle is planned.

12. Method (100) according to Claim 11, wherein the determined portions (2a) of the input image (2) on which the image classifier (1) bases its decision are compared (220) with a portion (2b) of the input image (2) which is known to be relevant for the evaluation of the traffic situation, and wherein a quality assessment (1a) for the image classifier (1) is determined (230) from the result (220a) of this comparison.

13. Computer program, containing machine-readable instructions which, when executed on one or more computers, cause the computer(s) to carry out the method (100) according to any of Claims 1 to 12.

14. Machine-readable data carrier and/or download product comprising the computer program according to Claim 13.

15. Computer comprising the computer program according to Claim 13 and/or comprising the machine-readable data carrier and/or download product according to Claim 14.

## Revendications

1. Procédé (100) de mesure des composantes (2a) d'une image d'entrée (2) sur lesquelles un classificateur d'image (1) fonde sa décision concernant l'affectation de cette image d'entrée (2) à une ou plusieurs classes d'une classification prédéfinie, comprenant les étapes suivantes :
• l'image d'entrée (2) est transformée (110) par le classificateur d'image (1) à travers une ou plusieurs couches de convolution en un produit intermédiaire (3) ;
• le produit intermédiaire (3) est mis en correspondance (120) par le classificateur d'image (1) avec une note de classification (7) relative à au moins une classe cible ;
• à partir d'une ou plusieurs contre-images (5a-5c), qui sont attribuées de manière prioritaire par le classificateur d'image (1) à au moins une classe autre que la classe cible, une perturbation (6) est déterminée (130) dans l'espace des produits intermédiaires (3),
la perturbation (6) étant calculée (131) à partir d'au moins un produit intermédiaire (3') en lequel le classificateur d'image (1) transforme une ou plusieurs contre-images (5a-5c),
au moins une contre-image étant sélectionnée parmi plusieurs contre-images, pour laquelle le produit intermédiaire calculé par le classificateur d'image est le plus proche du produit intermédiaire calculé à partir de l'image d'entrée selon une mesure de distance prédéfinie, une distance cosinus entre des vecteurs contenant les valeurs de pixels des produits intermédiaires respectifs étant utilisée comme mesure de distance ;
• au moins un masque binaire (4) est fourni (140), celui-ci ayant le même nombre de pixels que le produit intermédiaire (3) ;
• au moins une modification (3*) est calculée (150) à partir du produit intermédiaire (3), dans laquelle les pixels définis par le masque binaire (4) sont remplacés par des pixels correspondants de la perturbation (6),
une composante pertinente pour la décision concernant le produit intermédiaire (3), déterminée à partir d'un ou plusieurs masques binaires (4), étant transférée (190) par interpolation ou autre suréchantillonnage dans la composante pertinente pour la décision (2a) recherchée concernant l'image d'entrée (2), la modification (3*) x'_{L} utilisant le masque binaire m et une perturbation P_{L}(x) déterminée à partir de l'image d'entrée x étant exprimée comme suit : ${x}_{L}^{′} = {f}_{L} \left(x\right) ⊙ m + {P}_{L} \left(x\right) ⊙ \left(1-m\right)$, où x est l'image d'entrée (2), et f_{L} (x) est un produit intermédiaire (3) généré à partir de celle-ci par le classificateur d'image (1) dans l'espace latent ;
• la modification (3*) est mise en correspondance (160) par le classificateur d'image (1) avec une note de classification (7*) relative à une classe prédéfinie ;
• à partir de cette note de classification (7*), une fonction de qualité (8) est utilisée pour déterminer (170) dans quelle mesure (8a) le masque binaire (4) indique les composantes recherchées qui sont pertinentes pour la décision (2a) concernant l'image d'entrée (2),
une évaluation de qualité R_{x,f}(m) de chaque masque m correspondant à une note de classification f_{c} que le classificateur d'image (1) attribue à cette modification x'_{L} : ${R}_{x , f} \left(m\right) = {f}_{c} \left({x}_{L}^{′}\right)$, où, si N masques binaires *mᵢ* sont tirés dans l'espace des produits intermédiaires, un nombre d'évaluation S(λ) sera par exemple exprimé comme suit : ${S}_{x , f} \left(λ\right) \approx \frac{1}{E \left[m\right] ⋅ N} {\sum }_{i = 1}^{N} {R}_{x , f} \left({m}_{i}\right) ⋅ {m}_{i} \left(λ\right) ,$ où l'indice f désigne le classificateur d'image (1).

2. Procédé (100) selon la revendication 1, dans lequel un produit intermédiaire (3), qui est mis en correspondance par une couche de classificateur, dans le classificateur d'image (1), avec ladite au moins une note de classification (7), est sélectionné (111).

3. Procédé (100) selon la revendication 1 ou 2, dans lequel la perturbation (6) est calculée (131a) par moyennage ou par calcul d'une autre statistique récapitulative sur plusieurs produits intermédiaires (3') en lesquels le classificateur d'image (1) transforme différentes contre-images (5a-5c).

4. Procédé (100) selon l'une quelconque des revendications 1 à 3, dans lequel, parmi plusieurs contre-images (5a-5c), au moins une contre-image (5a-5c) est sélectionnée (131b), pour laquelle le produit intermédiaire (3') calculé par le classificateur d'image (1) est le plus proche du produit intermédiaire (3) calculé à partir de l'image d'entrée (2) selon une mesure de distance prédéfinie.

5. Procédé (100) selon l'une quelconque des revendications 1 à 4, dans lequel une pluralité de masques binaires (4) est fournie (141) et dans lequel, à partir de l'ensemble des masques (4) et des évaluations (8a) associées par la fonction de qualité (8), on détermine (180) les composantes recherchées qui sont pertinentes pour la décision (2a) concernant l'image d'entrée (2).

6. Procédé (100) selon la revendication 5, dans lequel, pour l'évaluation de chaque masque (4), au moins une contre-image (5a-5c) est sélectionnée (132) aléatoirement.

7. Procédé (100) selon l'une quelconque des revendications 5 à 6, dans lequel une composante pertinente pour la décision (2a) de l'image d'entrée (2) est évaluée (181) à partir d'une somme de masques binaires (4), qui sont respectivement pondérés par les évaluations (8a) de ces masques binaires (4) par la fonction de qualité (8).

8. Procédé (100) selon l'une quelconque des revendications 1 à 7, dans lequel la classe prédéfinie, pour laquelle la note de classification (7*) est déterminée à partir de la modification (3*), est la classe cible (161) et dans lequel la fonction de qualité (8) inclut (171) une comparaison de cette note de classification (7*) avec la note de classification (7) déterminée pour le produit intermédiaire (3).

9. Procédé (100) selon l'une quelconque des revendications 1 à 8, dans lequel une image d'un produit fabriqué en série est choisie (106) en tant qu'image d'entrée (2) et dans lequel les classes de la classification représentent une évaluation de la qualité du produit.

10. Procédé (100) selon la revendication 9, dans lequel les composantes (2a) déterminées de l'image d'entrée (2), sur lesquelles le classificateur d'image (1) fonde sa décision, sont comparées (200) à une composante (2b) de l'image d'entrée (2) qui a été déterminée comme pertinente pour l'évaluation de la qualité du produit sur la base d'une observation du même produit avec une modalité d'imagerie différente, et dans lequel une évaluation de qualité (1a) pour le classificateur d'image (1) est déterminée (210) à partir du résultat (200a) de cette comparaison (200).

11. Procédé (100) selon l'une quelconque des revendications 1 à 8, dans lequel une image d'une situation de circulation acquise depuis un véhicule est choisie (107) comme image d'entrée (2) et dans lequel les classes de la classification représentent des évaluations de la situation de circulation (50) sur la base desquelles le comportement futur du véhicule est planifié.

12. Procédé (100) selon la revendication 11, dans lequel les composantes (2a) déterminées de l'image d'entrée (2), sur lesquelles le classificateur d'image (1) fonde sa décision, sont comparées (220) à une composante (2b) de l'image d'entrée (2) qui est connue comme pertinente pour l'évaluation de la situation de circulation, et dans lequel une évaluation de la qualité (1a) pour le classificateur d'image (1) est déterminée (230) à partir du résultat (220a) de cette comparaison.

13. Programme informatique comprenant des instructions lisibles par machine qui, lorsqu'elles sont exécutées sur un ou plusieurs ordinateurs, amènent le(s) ordinateur(s) à mettre en œuvre un procédé (100) selon l'une quelconque des revendications 1 à 12.

14. Support de données lisible par machine et/ou produit à télécharger comprenant le programme informatique selon la revendication 13.

15. Ordinateur équipé du programme informatique selon la revendication 13 et/ou du support de données lisible par machine et/ou du produit à télécharger selon la revendication 14.
